# EUROPEAN PATENT SPECIFICATION

(11) **EP 0 896 162 B1**
(45) Date of publication and mention of the grant of the patent: **02.04.2003**
(21) Application number: 98113558.5
(22) Date of filing: 21.07.1998
(51) Int. Cl.: F16C 11/06

(54) **Locking device for the brake pedal of a vehicle to the pressure rod of a power brake**
Befestigungseinrichtung für das Bremspedal eines Fahrzeugs an der Druckstange einer Leistungsbremse
Dispositif de fixation pour la pédale d'un véhicule sur la barre de pression d'un frein assisté

(30) Priority: 07.08.1997 IT TO970719
(43) Date of publication of application: 10.02.1999
(73) Proprietor: S.I.V. S.p.A., 10040 Volvera (Torino) (IT)
(72) Inventor: La Rosa, Giacomo, 90144 Palermo (IT); Cavaglia', Renato, 10040 Volvera, Torino (IT)
(74) Representative: Di Francesco, Gianni

(56) References cited:
- EP-A- 0 413 623
- EP-A- 0 773 377
- EP-B- 0 229 350
- FR-A- 2 713 729
- US-A- 5 653 548

## Description

The invention relates to a locking device for the locking of the break pedal of a vehicle to the pressure rod of the power brake.

Commonly known embodiments of locking systems are characterized by the fact that the pressure rod of the power brake creates a spheric end and the pedal bears a corresponding spheric seat. Some of these devices, such as the device described in European patent EPB-0 229 350, include quickly mounted elastic means that ensure the release-type fastening of the spheric end to the pedal in a spheric joint type configuration. These quick-mount means are usually composed of two resiliently divaricatable keys that are fixed with the pedal or with a support fixed to the latter, therefore pushing the pressure rod into the seat, overcoming the elastic constrast ensured by such keys. The keys close on the pressure rod in a release-type closure, pressing against the rounded end of the pressure rod, preventing it from being released from the pedal, and allow the articulated movement of the pedal, within a certain angle.

This type of device presents a few practical problems. Such problems appear when the pedal is removed from the power brake to carry out maintenance operations. With connection systems of the type known it is difficult to release the elastic keys, as they are located in such a way as to render access to them difficult. It is also necessary to use an appropriate instrument that needs to be inserted in the pressure rod and pushed to divaricate the elastic keys in order to free the pressure rod from the pedal. Moreover, this type of intervention presents the risk of damaging the keys, that are usually made of plastic materials, not suited to withstand numerous interventions.

It is an object of the present invention to carry out a simple, low cost device that will simplify the release of the pressure rod release on the power brake of the pedal, reducing time required to carry out such interventions and making it possible to avoid any inconvenience mentioned previously.

This and other objects and advantages, that will be further understood in the following description, can be attained according to the present invention through a locking device for the brake pedal of a vehicle to the pressure rod of the power brake, of the type in which the pressure rod forms a spheric end and the pedal has a substantially spheric seat, and quick mount elastic means are provided for the release-type mounting of the spheric end to the pedal in a spheric joint type configuration, characterized by the fact that said elastic means are part of an interchangeable insert equipped with quickly fastened means that can be fastened to the pedal in an interchangeable way, and where said insert is an open ring shaped insert with a longitudinal opening for pressure rod release in a direction perpendicular to the axis of the pressure rod.

There will now be described the structural and functional characteristics of a preferred but not unique embodiment of the present invention, reference being made to the accompanying drawings, in which :
Figure 1 is an enlarged perspective view of the brake pedal and of the components of the locking device object of the present invention ;
Figure 2 is a sectional view of the pedal, locked onto the pressure rod of the power brake by way of the device object of the present invention ;
Figure 3 to 5 are sectional views of the locking phase of the power brake pressure rod to the device object of the present invention ;
Figure 6 is a section view that illustrates the opposite change phase, and
Figure 7 is an enlarged perspective view of said change phase.

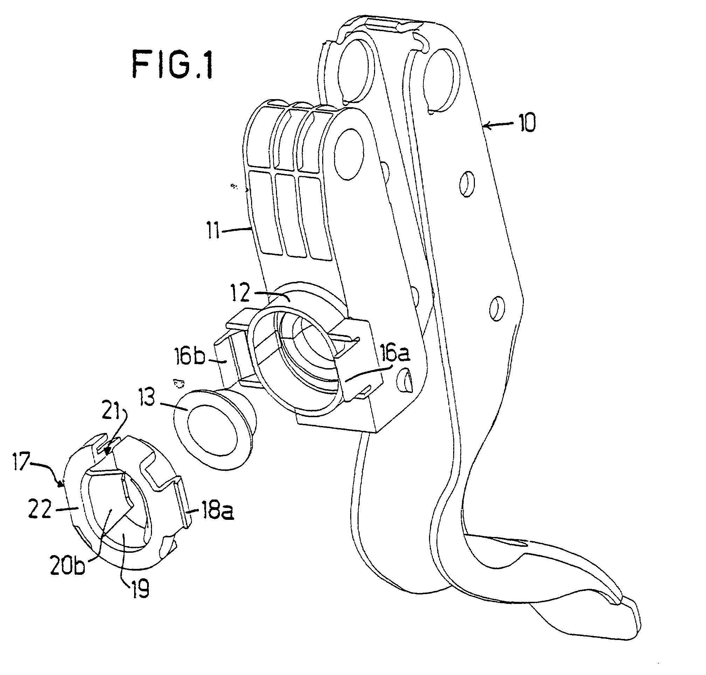

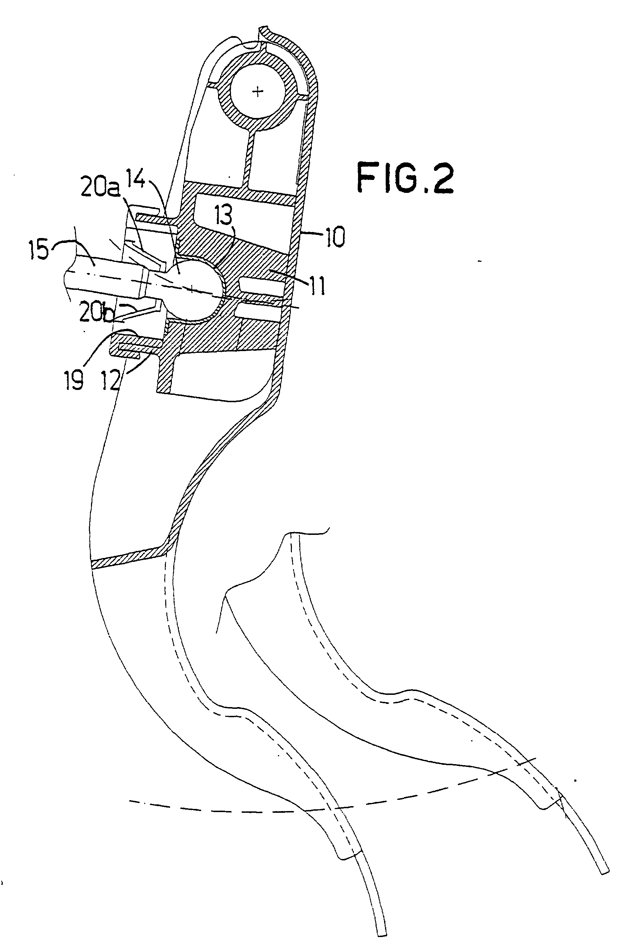

Reference being made to Figures 1 and 2, with the numeral 10 indicating the brake pedal, in which a support base 11 equipped with a cylinder-shaped seat 12 suited for the installation of a substantially hemispheric sleeve 13 in which, with the pressure rod mounted, the spheric head 14 is engaged in an articulated way, constituting an enlarged end of pressure rod 15 of the power brake.

Two resiliently divaricatable fins, 16a and 16b, are installed on support base 11, on the sides of the cylinder-shaped seat 12. These fins lock onto a substantially open ring-shaped insert 17 in a release-type lock, in an interchangeable way. Insert 17 includes, in positions corresponding to those of the interchangeable fins 16a and 16b of support base 11, a set of couplings 18a and 18b. These couplings engage in release-type way in fins 16a and 16b, respectively.

Insert 17, preferably prepared in plastic material, has an internal cylinder-shaped wall 19 that is inserted in the cylinder-type seat 12 of support base 11. On the internal section of cylinder-shaped wall 19 the insert forms two converging and resiliently interchangeable keys 20a and 20b, that extend from the back end 22 of the insert to inside the cylinder-shaped wall 19, where they are closened, tightening towards the pedal, in a direction defined previously. In the embodiment illustrated in the accompanying figures, keys 20a and 20b are curved in order that they are located on an ideal frustoconical-type surface, that is larger on the back end of insertion of the pressure rod head and is reduced progressively towards the front end. When the pressure rod is mounted, free ends (or front ends) of keys 20a and 20b point against the front end of head 14 of the pressure rod, preventing pedal release.

Also according to the present invention, the annular insert 17 is open, and creates and opening or longitudinal opening 21 of whose width corresponds to the diameter of the power brake pressure rod 15, opening 21 should preferably be carried out according to a plane perpendicular to the flexure plane of keys 20a and 20b.

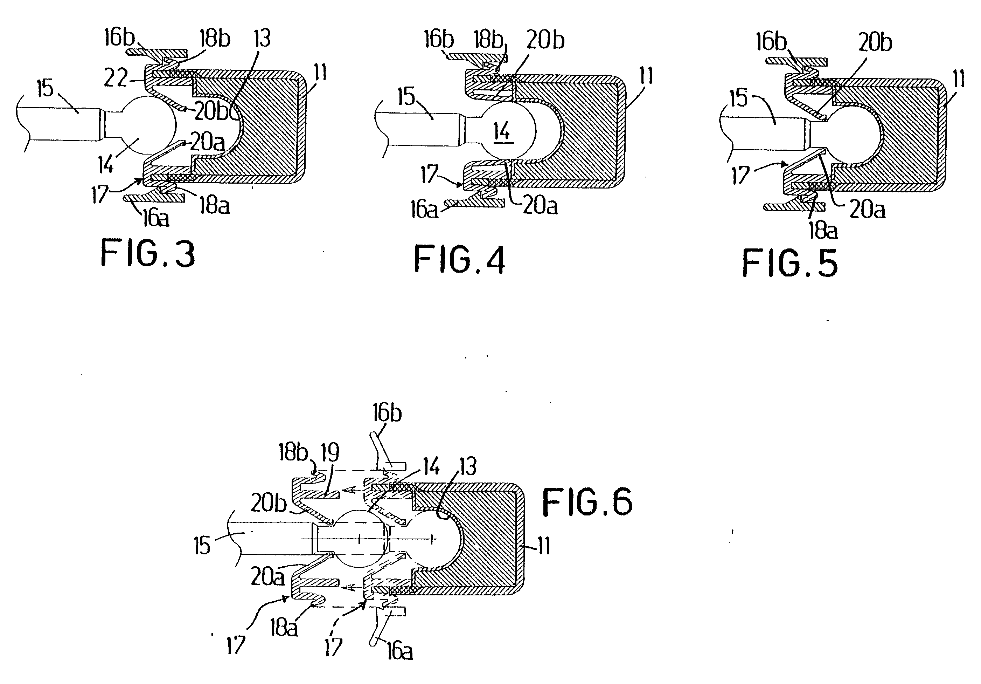

Reference being made to Figure 3, to connect the pressure rod of the power brake to the support base of the brake pedal, the locking device complete with hemispheric sleeve 13 and insert 17 is mounted in support base 11, couplings 18a and 18b are engaged in respective fins 16a and 16b, and the hemispheric sleeve 13 is fixed between insert 17 and support base 11. The axial length of the cylinder-shaped wall 19 of insert 17 is chosen in order that, when mounted, it blocks sleeve 13 against support base 11, integral with the pedal.

Once the pressure rod head is positioned against keys 20a and 20b, the pedal is pushed forward, divaricating the keys in constrast with the elastic action they exert (Figure 4), until head 14 is inserted in a release-type way into hemispheric sleeve 13 (Figure 5). Figure 2 illustrates the brake pedal connected to the pressure rod of the power brake, locked on. In this type of configuration, a rotating movement relative to the pedal with respect to the pressure rod is possible, within a certain rotation angle.

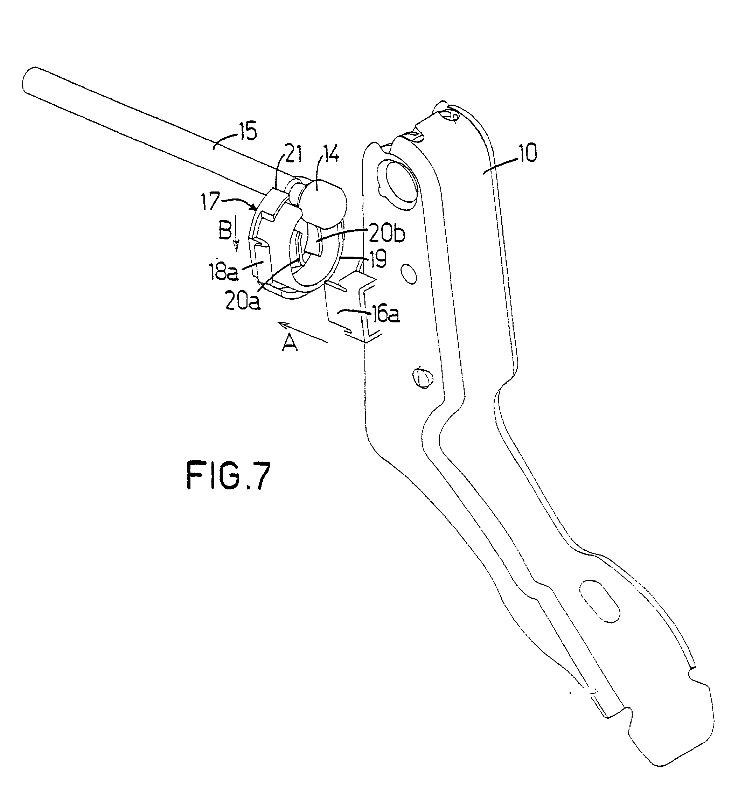

Reference being made to Figures 6 and 7, when it is necessary to release the pedal from the pressure rod of the power brake, it is necessary to resiliently divaricate fins 16a and 16b, releasing couplings 18a and 18b, and releasing the group constituted by pedal 15 and insert 17 from the pedal, releasing the pressure rod in the longitudinal direction indicated by arrow A in Figure 7. The insert can be removed from the pressure rod, sliding the latter from the longitudinal opening 21 of the insert in the direction perpendicular to the pressure rod axis, in the direction indicated by arrow B in Figure 7. Opening 21 will bear dimensions allowing easy sliding, or at least requiring as little effort as possible, when the latter is slightly smaller in width that pressure rod diameter.

As will be noticed, the device object of the present invention makes it possible to release the power brake pressure rod from the pedal in an easy way, without the need for special tools. Moreover, the pedal is released without having to intervene on the elastic keys, that may be damaged as a result of numerous interventions.

## Claims

1. Locking device for the pedal (10) of the brake of a vehicle to the pressure rod (15) of the power brake, of the type in which the pressure rod forms a spheric end (14) and the pedal bears a substantially spheric seat (13), and quick-mount elastic means (20a, 20b) are included for the release-type fastening of the spheric end (14) to the pedal (10) in a spheric joint-type configuration, **characterized by** the fact that said elastic means (20a, 20b) are part of an interchangeable insert (17), equipped with means (18a, 18b) for quick interchangeable locking onto the pedal, and where said insert (17) is a substantially open-ring shaped insert equipped with a longitudinal opening (21) suited to allow pressure rod release in a direction perpendicular to the axis of the pressure rod.

2. Device according to claim 1, **characterized by** the fact that the width of said longitudinal opening (21) substantially corresponds to the diameter of the power brake pressure rod (15).

3. Device according to claim 1, **characterized by** the fact that said means (18a, 18b) for quick locking of the insert (17) to the pedal are composed of a set of couplings that engage in an interchangeable way onto two corresponding resiliently divaricatable fins (16a, 16b), integral with the pedal.

4. Device according to claim 1, **characterized by** the fact that said elastic means (20a, 20b) are composed of two keys converging in the direction of the pedal, and resiliently divaricatable.

5. Device according to claim 4, **characterized by** the fact that said keys (20a, 20b) are curved inwards according to an ideal frustoconical-shaped surface, that is wider on the end section (22) or entrance section of the pressure rod and tightens on the pedal side.

6. Device according to claim 4, **characterized by** the fact that said keys (20a, 20b) extend from the back section (22) of the insert (17) to the inside section of the cylinder-shaped wall (19) of the insert (17).

7. Device according to claim 6, **characterized by** the fact that the axial length of the cylinder-shaped wall (19) of the insert (17) is such that, when mounted, it blocks a separate sleeve (13) against the pedal, said sleeve creating said spheric seat.

8. Device according to claims 1 and 4, **characterized by** the fact that said opening (21) is carried out according to a longitudinal plane perpendicular to the flexure plane of the keys (20a, 20b).

## Patentansprüche

1. Befestigungsvomchtung für das Pedal (10) der Bremse eines Fahrzeuges an die Druckstange (15) des Bremskraftverstärkers vom Typ, bei dem die Druckstange ein kugelförmiges Ende (14) bildet und das Pedal einen im Wesentlichen kugelförmigen Sitz (13) trägt und elastische Mittel (20a, 20b) zur Schnellmontage für das lösbare Befestigen des kugelförmigen Endes (14) an das Pedal (10) in einer kugelförmigen gelenkartigen Konfiguration beinhaltet sind, **dadurch gekennzeichnet, dass** die elastischen Mittel (20a, 20b) Bestandteil eines austauschbaren Einsatzteils (17) sind, das mit Mitteln (18a, 18b) für schnelles, austauschbares Einrasten an dem Pedal und wobei es sich bei dem Einsatzteil (17) um ein im Wesentlichen als offener Ring geformtes Einsatzteil handelt, das mit einer Längsaussparung (21) ausgestattet ist, die geeignet ist, das Lösen der Druckstange in eine zur Achse der Druckstange senkrechte Richtung zu ermöglichen.

2. Vorrichtung nach Anspruch 1, **dadurch gekennzeichnet, dass** die Breite der Längsaussparung (21) im Wesentlichen dem Durchmesser der Druclestange (15) des Bremskraftverstärkers entspricht.

3. Vorrichtung nach Anspruch 1, **dadurch gekennzeichnet**, dsss die Mittel (18a, 18b) zum schnellen Einrasten des Einsatzteils (17) an dem Pedal aus einer Reihe von Verbindungsstücken bestehen, die in austauschbarer Weise an zwei entsprechende elastisch veränderbare (divaricatable), mit dem Pedal integrale Rippen (16a, 16b) in Eingriff treten.

4. Vorrichtung nach Anspruch 1, **dadurch gekennzeichnet, dass** die elastischen Mittel (20a, 20b) aus zwei Keilen bestehen, die in Richtung des Pedals zusammen laufen und elastisch veränderbar sind.

5. Vorrichtung nach Anspruch 4, **dadurch gekennzeichnet, dass** die Keile (20a, 20b) nach innen gebogen sind gemäß einer idealen frustokonisch-geformten Fläche, die an dem Endbereich (22) oder dem Entrittsbereich der Druckstange breiter ist und zur Pedalseite hin schmaler wird.

6. Vorrichtung nach Anspruch 4, **dadurch gekennzeichnet, dass** sich die Keile (20a, 20b) vom hinteren Bereich (22) des Einsatzteils (17) zum inneren Bereich der zylindrisch-geformten Wand (19) des Einsatzteils (17) erstrecken,

7. Vorrichtung nach Anspruch 6, **dadurch gekennzeichnet, dass** die axiale Länge der zylindrisch-geformten Wand (19) des Einsatzteils (17) derart ist, dass sie im montierten Zustand eine separate Hülse (13) gegen das Pedal blockiert, wobei die Hälse den kugelförmigen Sitz bildet,

8. Vorrichtung nach den Ansprüchen 1 und 4, **dadurch gekennzeichnet, dass** die Aussparung (21) gemäß einer zur Biegungsebene der Keile (20a, 20b) senkrechten Langsebene ausgeführt ist.

## Revendications

1. Dispositif de fixation pour la pédale (10) de frein d'un véhicule sur la barre de pression (15) d'un frein assisté, du type dans lequel la barre de pression forme une extrémité sphérique (14) et les ours de pédale, substantiellement un siège (13) sphérique, et un moyen d'élastique de montage rapide (20a, 20b) sont compris dans la fermeture de déclenchement de l'extrémité sphérique (14) à la pédale (10) dans une configuration de type joint sphérique, **caractérisé en ce que** ledit moyen d'élastique (20a, 20b) fait partie d'une pièce d'insertion interchangeable (17), équipée avec un moyen (18a, 18b) pour des fixations interchangeables rapides sur la pédale, et où ladite pièce d'insertion (17) est sensiblement une pièce d'insertion formée en anneau ouvert équipée d'une ouverture longitudinale (21) adaptée pour permettre de relâcher la barre de pression dans une direction perpendiculaire à l'axe de la barre de pression.

2. Dispositif selon la revendication 1, **caractérisé en ce que** la largeur de ladite ouverture longitudinale (21) correspond sensiblement au diamètre de la barre de pression (15) du frein assisté.

3. Dispositif selon la revendication 1, **caractérisé en ce que** ledit moyen (18a, 18b) pour une fixation rapide de la pièce d'insertion (17) à la pédale est composé d'un ensemble de couplages qui engage sur une voie interchangeable vers deux ailettes élastiquement divaricatables et correspondantes (16a, 16b), parties intégrantes de la pédale.

4. Dispositif selon la revendication 1, **caractérisé en ce que** lesdits moyens d'élastique (20a, 20b) sont composés de deux clés convergentes dans la direction de la pédale, et élastiquement divaricatables.

5. Dispositif selon la revendication 4, caractérisé en que lesdites clés (20a, 20b) sont incurvées vers l'intérieur selon une surface de forme frusto-conique idéale, qui est plus large dans la partie de l'extrémité (22) ou la partie d'entrée de la barre de tension et fixe le côté de la pédale.

6. Dispositif selon la revendication 4, **caractérisé en ce que** lesdites clés (20a, 20b) s'étendent de la partie arrière (22) de la pièce d'insertion (17) à la partie intérieure de la paroi de forme cylindrique (19) de la pièce d'insertion (17).

7. Dispositif selon la revendication 6, **caractérisé en ce que** la longueur axiale de la paroi de forme cylindrique (19) de la pièce d'insertion (17) est faite de telle façon que, lorsqu'il est monté, il bloque la chemise séparée (13) contre la pédale, ladite chemise créant ledit siège sphérique.

8. Dispositif selon les revendications 1 et 4, **caractérisé en ce que** ladite ouverture (21) est effectuée selon un plan longitudinal perpendiculaire au plan flexible des clés (20a, 20b).
